(19) Europäisches Patentamt
European Patent Office
Office européen des brevets

(11) **EP 3 312 114 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(51) Int Cl.:
***B65H 23/02*** *(2006.01)*

(21) Anmeldenummer: **17001689.3**

(22) Anmeldetag: **13.10.2017**

(54) **VERFAHREN UND VORRICHTUNG ZUR LAGEERFASSUNG EINER LAUFENDEN WARENBAHN**

METHOD AND DEVICE FOR DETECTING THE POSITION OF A MOVING WEB

PROCÉDÉ ET DISPOSITIF DE DÉTECTION DE LA POSITION D'UNE BANDE DE MARCHANDISE EN MOUVEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2016 DE 102016012500**

(43) Veröffentlichungstag der Anmeldung:
**25.04.2018 Patentblatt 2018/17**

(73) Patentinhaber: **Texmag GmbH Vertriebsgesellschaft**
**8800 Thalwil (CH)**

(72) Erfinder: **Eisen, Jürgen**
**86199 Augsburg (DE)**

(74) Vertreter: **Witzany, Manfred**
**Patentanwalt**
**Falkenstrasse 4**
**85049 Ingolstadt (DE)**

(56) Entgegenhaltungen:
**EP-A1- 2 703 772      US-A- 4 694 181**
**US-E- R E32 967**

## Beschreibung

Die Erfindung betrifft ein Verfahren zur Lageerfassung einer in einer Laufrichtung laufenden Warenbahn, auf der mindestens eine Markierung vorgesehen ist. Außerdem betrifft die Erfindung eine Vorrichtung zur Durchführung dieses Verfahrens.

Aus der EP 2 703 772 B1 ist ein gattungsgemäßes Verfahren bekannt. Bei diesem wird eine laufende Warenbahn optisch abgetastet, um die Lage einer Markierung auf der Warenbahn zu erfassen. Dieses Verfahren hat sich in der Praxis vielfach bewährt und bildet den Ausgangspunkt der vorliegenden Erfindung. Ein weiteres, als nächstliegender Stand der Technik angesehenes Verfahren und eine entsprechende Vorrichtung sind aus der US 4 694 181 A bekannt. Der Erfindung liegt die Aufgabe zugrunde, ein Verfahren der eingangs genannten Art zu schaffen, welches sich durch eine verbesserte Zuverlässigkeit auszeichnet. Außerdem soll eine Vorrichtung zur Durchführung dieses Verfahrens angegeben werden.

Das erfindungsgemäße Verfahren dient zur Lageerfassung einer in einer Laufrichtung laufenden Warenbahn. Auf dieser ist mindestens eine Markierung vorgesehen. Als Markierung ist hier und im Folgenden eine bewusst auf der Warenbahn angebrachte lokale Veränderung der Warenbahn zu verstehen. Beispiele für eine Markierung sind Erhebungen bzw. Vertiefungen der Warenbahn, Aufdrucke, eingewebte Fäden aus anderem Material oder mit anderer Färbung, aufgeklebte Streifen, Falze, Randkanten, unterschiedliche Magnetisierungen oder Magnetisierbarkeiten. Diese Aufzählung ist jedoch lediglich beispielhaft und nicht abschließend zu verstehen. Keinesfalls ist unter einer Markierung aber eine zufällig auf der Warenbahn angebrachte Oberflächenveränderung zu verstehen. Die Markierung soll bezüglich ihrer Lage als Kriterium zur Lageerfassung dienen. Sie kann aber neben dem Führungskriterium auch anderen Zwecken dienen wie beispielsweise Knickkanten oder um einen bestimmten optischen Eindruck zu erzeugen. Demnach soll die Lageerfassung der Warenbahn anhand der Lage der Markierung bestimmt werden. Hierfür gibt es vielerlei Anwendungen. Lediglich beispielhaft sei erwähnt, dass bei Karton- und Verbundverpackungen oftmals Falze zum Knicken der Verpackung angebracht werden müssen. Ist die Verpackung aber bedruckt, so sollten die Falze passend zum Druckbild und nicht unbedingt passend zur Bahnkante angeordnet werden. Hierzu ist es aber erforderlich, die bereits bedruckte Bahn mit ausgerichtetem Druckbild einer Falzmaschine zuzuführen. Hierzu wird die Warenbahn von mindestens einem ersten Sensor erfasst, der ein von der Markierung abhängiges Messsignal erzeugt und daraus mindestens ein zur Lage der Markierung proportionales Lagesignal abgibt. Anhand dieses mindestens einen Lagesignals kann grundsätzlich die Warenbahn geführt werden. Es hat sich nun herausgestellt, dass aufgrund von vielerlei Umständen die Markierungserfassung unzuverlässig sein kann. Beispielsweise kann die relevante Markierung nicht über die gesamte Länge der Warenbahn vorhanden sein, so dass die Markierung nur zu bestimmten Zeitpunkten erfassbar ist. Außerdem kann die Erfassung der Markierung durch externe Einflüsse, insbesondere unterschiedliche Belichtung, gestört werden. Dies alles führt dazu, dass das Lagesignal zu gewissen Zeiten ggf. nicht oder nicht mit der erforderlichen Genauigkeit erzeugt werden kann. Insbesondere in Anwendungsfällen, in denen dieses mindestens eine Lagesignal einer Regeleinrichtung als Ist-Wert zugeführt wird, führt dies zu erheblichen Stabilitätsproblemen des Regelkreises. Zur Verbesserung der Zuverlässigkeit der Lageerfassung der Warenbahn wird diese von mindestens einem zweiten Sensor erfasst, der mindestens eine Geschwindigkeitskomponente der Warenbahn quer zur Laufrichtung erfasst. Dieser mindestens eine zweite Sensor muss dabei nicht unbedingt die o. g. Markierung erfassen. Er kann vielmehr beliebige Eigenschaften der Warenbahn zur Erfassung nutzen. Diese Eigenschaften müssen lediglich so gestaltet sein, dass hieraus in zuverlässiger Weise die Geschwindigkeitskomponente der Warenbahn quer zu ihrer Laufrichtung bestimmt werden kann. Damit entfällt die Notwendigkeit, für die Lage einen Absolutwert zu erzeugen. Beispielsweise kann bei bedruckten Warenbahnen das gesamte Druckbild zur Geschwindigkeitserfassung genutzt werden. Daneben sind aber auch noch beliebige andere Methoden zur Geschwindigkeitserfassung möglich. Dieser mindestens eine zweite Sensor gibt mindestens ein zur Geschwindigkeitskomponente quer zur Laufrichtung der Warenbahn proportionales Geschwindigkeitssignal ab, welches mit dem mindestens einen Lagesignal mathematisch derart verknüpft wird, dass hieraus mindestens ein Ausgangssignal berechnet wird. Die Berechnung erfolgt dabei derart, dass auch beim Ausfall des mindestens einen Lagesignals lageproportionale Werte für das mindestens eine Ausgangssignal erzeugt werden. Dies kann man sich grundsätzlich so vorstellen, dass für den Fall, dass mindestens ein korrektes Lagesignal ermittelt werden kann, dieses auch als mindestens eines der Ausgangssignale genutzt wird. Kann jedoch kein Lagesignal ermittelt werden, so wird unter Zuhilfenahme des mindestens einen Geschwindigkeitssignals das mindestens eine Ausgangssignal so lange nachkorrigiert, bis wieder ein Lagesignal erzeugt werden kann, welches dann wieder unmittelbar als Ausgangssignal dient. Auf diese Weise können Ausfälle des Lagesignals problemlos überbrückt werden, so dass eine das mindestens eine Ausgangssignal verarbeitende Regelung problemlos weiterarbeiten kann. Hierdurch wird die Zuverlässigkeit der Lageerfassung der Warenbahn erheblich verbessert und die Anwendbarkeit des Verfahrens auf Markierungen, welche nur sehr schwer zu erfassen sind, erweitert. Hierdurch wird auch die Genauigkeit der Lageerfassung verbessert, da das gewünschte Führungskriterium unmittelbar verwendet werden kann, was Fehler reduziert.

Grundsätzlich ist es völlig ausreichend, die Geschwindigkeit der laufenden Warenbahn eindimensional zu erfassen, sofern diese zumindest eine Geschwindigkeitskomponente quer zur Warenbahnlaufrichtung enthält. Zusätzlich kann aber auch eine Erfassung der Warenbahngeschwindigkeit in Laufrichtung der Warenbahn erfolgen, um diese Information für weitere Auswertungen zu nutzen. Auf diese Weise kann die Bahnlaufgeschwindigkeit sehr präzise erfasst werden, um Stellglieder entsprechend anzusteuern. Durch Vergleich mit einer Walzendrehzahl kann auch jeglicher Haftungsverlust der laufenden Warenbahn ermittelt werden, um schnell entsprechende Gegenmaßnahmen ergreifen zu können. Außerdem kann die Information der Warenbahngeschwindigkeit in Laufrichtung auch vorteilhaft genutzt werden, um die maximale Stellgeschwindigkeit anzupassen. Unter bestimmten Betriebsbedingungen, wie beispielsweise bei einem Haftungsverlust der Warenbahn, kann auch eine Verblockung von Regelgliedern zur Beeinflussung des Warenbahnlaufs erfolgen, da diese unter den beschriebenen Bedingungen nicht mehr zuverlässig arbeiten. Auf diese Weise werden starke Regelausschläge vermieden.

Eine einfache und gleichzeitig zuverlässige Form der Erzeugung des mindestens einen Geschwindigkeitssignals ergibt sich durch Erfassung einer zeitlichen Verschiebung von Bildern der Warenbahn. Dabei wird die laufende Warenbahn vorzugsweise periodisch abgetastet und entsprechende Bilder erzeugt. Aufeinanderfolgende Bilder zeigen dabei eine gewisse Verschiebung, aus der die Geschwindigkeit der Warenbahn ermittelt werden kann. Von dieser Geschwindigkeit wird allerdings nur jene Komponente benötigt, welche senkrecht zur Laufrichtung ausgerichtet ist. Alternativ kann das mindestens eine Geschwindigkeitssignal auch durch zwei-dimensionale Ortsfilterung erzeugt werden. Dabei wird beispielsweise die Filterwirkung eines CCD-Sensors oder CMOS-Sensors genutzt. Ein Objektiv bildet dabei die laufende Warenbahn auf Pixel des CCD- bzw. CMOS-Sensors ab, die mit wechselndem Vorzeichen zum Ausgangssignal beitragen. Im Ausgangssignal werden dann Frequenzanteile untersucht. Die Bewegungsgeschwindigkeit entspricht dabei dem Produkt aus dem Abbildungsmaßstab, der Gitterperiode des Sensors und der gemessenen Frequenz. Insbesondere bei eindimensionaler Geschwindigkeitserfassung der laufenden Warenbahn ist es vorteilhaft, wenn die Erfassungsrichtung mit der Bahnlaufrichtung einen spitzen Winkel einschließt. Dieser spitze Winkel liegt vorzugsweise im Bereich zwischen 30° und 60°, insbesondere 45°. Durch diese Maßnahme wird der zu erwartenden geringen Bahnlaufgeschwindigkeit quer zur Warenbahnlaufrichtung Rechnung getragen. Verschiedene Geschwindigkeitsmesssysteme benötigen eine Mindestgeschwindigkeit, die durch die genannte spitzwinkelige Anstellung in einfachster Weise realisierbar ist.

Als weitere Alternative kann auch der Doppler-Effekt ausgenutzt werden. Dabei wird ein Lichtstrahl, vorzugsweise von einem Laser auf die laufende Warenbahn gerichtet und frequenzaufgelöst analysiert. Eine Frequenzverschiebung zum einstrahlenden Licht ergibt sich aufgrund des Doppler-Effekts durch die sich bewegende Warenbahn. Diese Frequenzverschiebung ist proportional zur Warenbahngeschwindigkeit und kann direkt als Maß genutzt werden. Diese Sensorvariante ist sehr einfach zu realisieren, indem man in einen beliebigen Sensor einen Laser-Doppler-Sensor einbaut. Als weitere Alternative können jedoch auch selbstmodulierende Laserdioden genutzt werden. Diese erzeugen einen Laserstrahl, der von der Warenbahn in sich selbst zurückreflektiert wird und auf diese Weise die Lichterzeugung in der Laserdiode moduliert. Auf diese Weise ergibt sich eine von der Warenbahngeschwindigkeit abhängige Leistungsmodulation der Laserdiode, die relativ einfach ausgewertet werden kann. Ein derartiger Geschwindigkeitssensor ist besonders kostengünstig, wobei die Ausrichtung zur Warenbahn sehr präzise erfolgen muss.

Eine einfache Methode zur Berechnung der zeitlichen Verschiebung der Warenbahn ergibt sich durch eine Korrelationsanalyse. Dabei werden verschiedene Bilder der Warenbahn mittels einer Kreuzkorrelationsfunktion verknüpft und aus dem Maximum dieser Funktion die zeitliche Verschiebung der Bilder berechnet. Bei bekanntem zeitlichen Abstand der Bilder ergibt sich hieraus ein zur Geschwindigkeit proportionaler Wert. Dabei kann ggf. die bekannte bzw. einfach zu messende Warenbahngeschwindigkeit in Laufrichtung unmittelbar genutzt werden, so dass die Korrelationsanalyse im Wesentlichen eindimensional erfolgen kann. Alternativ kann bei einer zweidimensionalen Kreuzkorrelation der zu berechnende Wertebereich in Warenbahnlaufrichtung entsprechend eingeschränkt werden, um den erforderlichen Rechenaufwand zu reduzieren. Es ist auf diese Weise auch möglich, durch Vergleich der gemessenen Geschwindigkeit mit der Walzendrehzahl Schlupf- bzw. Rutschfehler zu erkennen.

Um sicher entscheiden zu können, ob das mindestens eine Lagesignal direkt oder indirekt über das mindestens eine Geschwindigkeitssignal genutzt werden soll, ist es vorteilhaft, wenn der mindestens eine erste Sensor mindestens ein Hilfssignal abgibt, welches die Qualität der Erfassung der mindestens einen Markierung anzeigt. Bei fehlender oder fehlerhafter Erfassung der mindestens einen Markierung ergibt sich auf diese Weise eine einfache Möglichkeit zu entscheiden, wie das mindestens eine Ausgangssignal erzeugt werden soll. Vorzugsweise kann das mindestens eine Hilfssignal binär sein, da lediglich entschieden werden muss, welche von zwei Arten der Erzeugung des mindestens einen Ausgangssignals anzuwenden ist.

Um das ermittelte mindestens eine Lagesignal möglichst effektiv nutzen zu können, ist es vorteilhaft, wenn dieses gespeichert wird, bis ein weiterer, zuverlässiger Messwert durch den mindestens einen ersten Sensor erfasst wird. Dabei wird vorzugsweise das mindestens eine Hilfssignal genutzt, um die Speicherung des mindestens einen Lagesignals auszulösen. Auf diese Weise wird erreicht, dass für den Fall, dass das mindestens eine Lagesignal ausfällt oder unzuverlässig wird, der letzte oder zumindest einer der letzten zuverlässigen Messwerte zur Verfügung steht. Da grundsätzlich davon auszugehen ist, dass sich die Lage der Warenbahn nur geringfügig bzw. langsam ändert, lässt sich unter Zuhilfenahme des mindestens einen Geschwindigkeitssignals die exakte Lage der Warenbahn trotz Ausfall des mindestens einen Lagesignals sehr genau berechnen. Alternativ kann statt des mindestens einen Lagesignals auch das mindestens eine Lagesignal zuzüglich einem Integral des mindestens einen Geschwindigkeitssignals berechnet werden. Vorzugsweise wird dabei das Integral des mindestens einen Geschwindigkeitssignals ab dem Zeitpunkt der Erfassung der mindestens einen Markierung der Warenbahn addiert. Auf diese Weise ergibt sich eine vorteilhafte Latenzzeitkompensation, die für die Auswertung des mindestens einen Lagesignals anfällt. Das Ausgangssignal folgt dabei nahezu unmittelbar der mindestens einen Markierung der Warenbahn, obwohl die Berechnung der Markierungsposition ggf. erhebliche Zeit beanspruchen kann.

Eine recht einfache Berechnung des mindestens einen Ausgangssignals ergibt sich, wenn das gespeicherte Lagesignal als Anfangswert einer Integration des mindestens einen Geschwindigkeitssignals verwendet wird. Im Moment des Ausfalls des mindestens einen Lagesignals liefert dieses Integral einfach den letzten, gespeicherten Messwert des mindestens einen Lagesignals. Mit zunehmender Verschiebung der Warenbahn quer zur Laufrichtung integriert sich das mindestens eine Geschwindigkeitssignal auf, um auf diese Weise das mindestens eine Ausgangssignal zu erzeugen. Diese Integration wird zwar mit zunehmender Zeit immer ungenauer, sobald jedoch wieder ein neuer, gültiger Messwert des mindestens einen Lagesignals ermittelt werden kann, wird dieser wieder unmittelbar als Ausgangssignal verwendet, wobei in der Regel nur kurze Zeiten zu überbrücken sind. In diesen Zeiten liefert das mindestens eine Ausgangssignal eine hinreichende Abhängigkeit vom Bahnverlauf, was insbesondere im Falle einer Bahnlaufregelung wichtig ist.

Zur Erzielung einer Bahnlaufregelung ist es vorteilhaft, wenn das mindestens eine Ausgangssignal als Ist-Wert eingesetzt wird. Damit können Bahnverläufe quer zur Laufrichtung der Warenbahn zuverlässig ausgeregelt werden.

Zur Durchführung des erfindungsgemäßen Verfahrens hat sich die folgende Vorrichtung bewährt. Sie weist mindestens einen ersten Sensor zur Erfassung einer Markierung auf einer Warenbahn auf. Außerdem weist sie mindestens einen zweiten Sensor auf, der mindestens eine Geschwindigkeitskomponente der Warenbahn quer zur Laufrichtung erfasst. Diese Sensoren stehen mit mindestens einer Rechenschaltung in Wirkverbindung, die aus dem mindestens einen Lagesignal und dem mindestens einen Geschwindigkeitssignal mindestens ein Ausgangssignal berechnet. Die mindestens eine Rechenschaltung berechnet das mindestens eine Ausgangssignal derart, dass bei einem Ausfall des mindestens einen Lagesignals unter Einbeziehung des mindestens einen Geschwindigkeitssignals lageproportionale Werte ermittelt werden können.

Für wenigstens einen der Sensoren hat sich eine Kamera bewährt, die ein Bild der laufenden Warenbahn erzeugt. Bei optisch abtastbaren Warenbahnen kann dies auch für beide Sensoren eingesetzt werden. Damit lassen sich insbesondere Aufdrucke, Erhebungen und Vertiefungen sowie Falze detektieren. Die dreidimensionalen Strukturen werden dabei insbesondere anhand der Schattenwirkung bei schräg einfallendem Licht detektiert.

Die Rechenschaltung enthält vorzugsweise mindestens einen Integrator, der mit dem mindestens einen Lagesignal als Ausgangswert das zeitliche Integral des mindestens einen Geschwindigkeitssignals berechnet. Dieser mindestens eine Integrator ermittelt das Integral über die Geschwindigkeit, welches einem Weg entspricht. Da der Ausgangswert dieser Integration das letzte oder eines der letzten des mindestens einen Lagesignals ist, folgt das mindestens eine Ausgangssignal des mindestens einen Integrators der Lage der Warenbahn. Insbesondere mit Hilfe digitaler Rechenschaltungen, insbesondere Mikrocontrollern, ist die Realisierung eines Integrators mit sehr geringem Aufwand und hoher Präzision möglich.

Günstig ist es außerdem, wenn die mindestens eine Rechenschaltung mindestens einen Steuereingang aufweist, der bei vorhandenem Lagesignal dieses statt dem integrierten Signal ausgibt. Dadurch ist sichergestellt, dass bei mindestens einem vorhandenen Lagesignal dieses ausgegeben wird und der mindestens eine Integrator somit keine Rolle spielt. Die Geschwindigkeitsintegration ist nur beim Ausfall des mindestens einen Lagesignals relevant, sofern keine Latenzzeitkompensation vorgenommen wird.

Schließlich ist es vorteilhaft, wenn die Vorrichtung mit mindestens einem Regler in Wirkverbindung steht. Auf diese Weise kann das Ausgangssignal als Ist-Wert des mindestens einen Reglers genutzt werden, um eine Bahnlaufregelung zu realisieren. Diese bleibt selbst dann in Funktion, wenn die eigentliche Regelgröße, nämlich die Lage der mindestens einen Markierung, stellenweise nicht vorhanden oder nicht detektierbar ist.

Der Erfindungsgegenstand wird beispielhaft anhand der Zeichnung erläutert, ohne den Schutzumfang zu beschränken.

Es zeigt:

Figur 1:    eine räumliche Prinzipdarstellung einer ersten Ausführungsform einer Vorrichtung zur Lageerfassung einer laufenden Warenbahn und

Figur 2:    eine zweite Ausführungsform der Vorrichtung gemäß Figur 1.

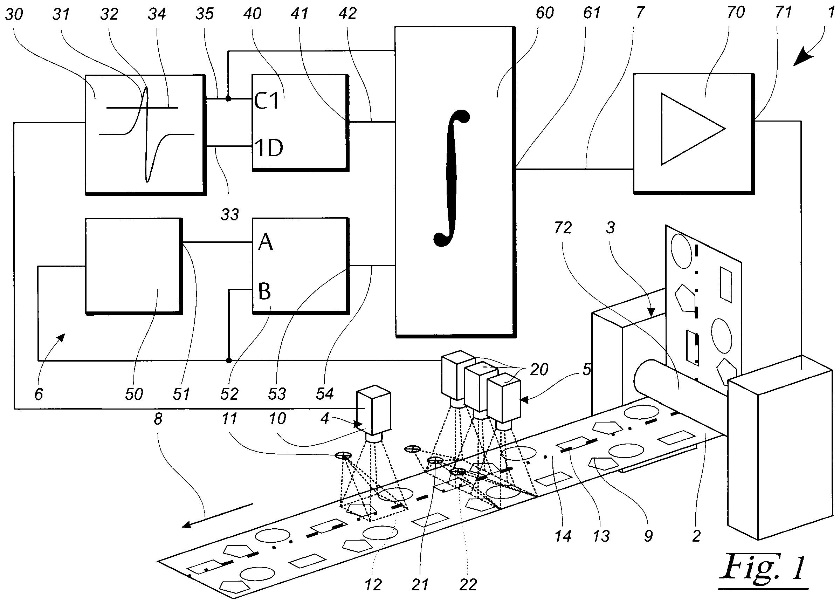

Die Figur 1 zeigt eine räumliche Prinzipdarstellung einer Vorrichtung 1 zur Lageerfassung einer laufenden Warenbahn 2 sowie einer Bahnlaufregelvorrichtung 3. Die Vorrichtung 1 weist einen ersten Sensor 4 und einen zweiten Sensor 5 auf, die die Warenbahn 2 erfassen. Diese Sensoren 4, 5 stehen mit einer Rechenschaltung 6 in Wirkverbindung, welche hieraus ein Ausgangssignal 7 erzeugt. Dieses Ausgangssignal 7 dient als Ist-Wert der Bahnlaufregelvorrichtung 3, um die in der Laufrichtung 8 transportierte Warenbahn 2 quer zur Laufrichtung 8 zu führen.

Die erste Sensor 4 wird von einer Kamera 10 und einer zugeordneten Lichtquelle 11 gebildet. Die Kamera 10 ist dabei derart über der Warenbahn 2 angeordnet, dass deren Erfassungsbereich 12 eine auf der Warenbahn 2 angebrachte Markierung 13 erfasst. Diese Markierung 13 erstreckt sich dabei nicht über die gesamte Länge der Warenbahn 2, sondern sie weist vielmehr entsprechende Unterbrechungen 14 auf. Diese Unterbrechungen 14 sind der Grund dafür, dass der erste Sensor 4 die Lage der Markierung 13 nicht zu jedem Zeitpunkt erfassen kann, sondern grundsätzlich nur zu solchen Zeitpunkten, in denen die Markierung 13 auch im Erfassungsbereich 12 der Kamera 10 liegt. Damit sind der Auswahl der Markierung 13 weite Grenzen gesetzt. Insbesondere können als Markierung 13 auch solche Eigenschaften der Warenbahn 2 genutzt werden, die diese ohnehin aufweisen muss, um den späteren Anwendungszweck zu erfüllen. Beispielsweise kann die Markierung 13 eine Falzkante sein, die nur in bestimmten Bereichen der Warenbahn 2 vorhanden ist. Daneben sind viele andere Markierungen 13 denkbar. Auf diese Weise spart man sich die Anbringung einer Markierung in einem Bereich der Warenbahn 2 außerhalb der Nutzen. Zusätzlich wird der Ausrichtungsfehler der Warenbahn zu verschiedenen Aspekten reduziert. Soll beispielsweise eine mit einem Druckbild versehene Warenbahn 2 gefalzt werden, so ist es wünschenswert, die Falzung auf das Druckbild auszurichten. Damit ist es auf jeden Fall genauer, das Druckbild selbst und nicht eine zusätzlich aufgebrachte Markierung 13 zu nutzen. Die nicht dauerhaft vorhandene Markierung 13 macht jedoch die Anwendung der Markierung 13 als Führungskriterium der Warenbahn 2 schwierig.

Die Warenbahn 2 wird mit dem zweiten Sensor 5 abgetastet, der von einer Anzahl Kameras 20 gebildet ist, welche einen großen Bereich der Warenbahn - über deren Breite gesehen - abdecken. Dieser Kamera 20 ist wiederum eine entsprechende Lichtquelle 21 zugeordnet. Ein Erfassungsbereich 22 des zweiten Sensors 5 erstreckt sich dabei über die gesamte Breite der Warenbahn 2. In einfachen Fällen kann der Erfassungsbereich 22 auch entsprechend kleiner gewählt werden. Wichtig ist lediglich, dass der zweite Sensor 5 auch bei einer Unterbrechung 14 der Markierung 13 ein entsprechendes Ausgangssignal 7 liefert.

Ausgangssignale des ersten Sensors 4 und zweiten Sensors 5 werden der Rechenschaltung 6 zugeführt, die im Folgenden näher erläutert wird. Die Rechenschaltung 6 weist eine erste Bildverarbeitungsvorrichtung 30 auf, die neben ggf. vorhandenen Filtern im Wesentlichen einen Liniendetektor enthält. Dieser Liniendetektor arbeitet beispielsweise nach dem Differenzialprinzip. Dabei wird quer zur Laufrichtung 8 die erste Ableitung des vom ersten Sensor 4 gewonnenen Bildes gebildet und das Ergebnis in Bahnlaufrichtung 8 gemittelt. Stellt die Markierung 13 einen hohen Kontrast zur Umgebung der Warenbahn 2 her, so ergibt sich im Bereich der Markierung ein charakteristischer Peak 31, dessen Lage 32 als Lagesignal 33 ausgegeben wird.

Überschreitet der genannte Peak 31 eine gewisse Mindestamplitude 34, so kann dies als Indiz für eine korrekte Erfassung der Markierung 13 herangezogen werden. In diesem Fall wird die Bildverarbeitungsvorrichtung 30 ein positives Hilfssignal 35 abgeben. Überschreitet der Peak 31 die Mindestamplitude 34 jedoch nicht, so wird dies als Indiz angesehen, dass entweder die Markierung 13 nicht im Erfassungsbereich 12 der Kamera 10 liegt, oder die Auswertung in anderer Weise gestört ist. In jedem Fall wird dann für das Hilfssignal 35 ein negatives Signal ausgegeben. Damit kann das Hilfssignal 35 von den weiteren Komponenten der Rechenschaltung 6 dazu genutzt werden zu entscheiden, ob eine korrekte Erfassung der Markierung 13 erfolgt ist oder nicht.

Die Bildverarbeitungsvorrichtung 30 steht mit einer Speichervorrichtung 40 in Wirkverbindung, der sowohl das Lagesignal 33 als auch das Hilfssignal 35 zugeführt werden. Diese Speichervorrichtung 40 speichert das Lagesignal 33 immer dann, wenn ein positives Hilfssignal 35 vorliegt. Sobald jedoch ein negatives Hilfssignal 35 der Speichervorrichtung 40 zugeführt wird, erfolgt keine Speicherung des Lagesignals 33 mehr, so dass der zuletzt gespeicherte Wert des Lagesignals 33 in der Speichervorrichtung 40 erhalten bleibt. Die Speichervorrichtung 40 gibt an einem Ausgang 41 ein gespeichertes Lagesignal 42 ab, welches den weiteren Komponenten der Rechenschaltung 6 zugeführt wird. Dieses gespeicherte Lagesignal 42 entspricht bei korrekter Erfassung der Markierung 13 dem Lagesignal 33 und repräsentiert damit die Lage der Markierung 13. Bei fehlerhafter Detektion der Markierung 13 repräsentiert das gespeicherte Lagesignal 42 jedoch den letzten ordnungsgemäß detektierten Wert des Lagesignals 33.

Der zweite Sensor 5 steht mit einem Bildspeicher 50 in Wirkverbindung. Dieser Bildspeicher 50 speichert das Bild der Kameras 20 und stellt es an einem Ausgang 51 zur Verfügung. Der Bildspeicher 50 ist mit dem zweiten Sensor 5 derart gekoppelt, dass an seinem Ausgang 51 nicht das aktuelle Bild der Kameras 20, sondern das davor erzeugte Bild zur Verfügung steht. Sowohl die Kameras 20 als auch der Ausgang 51 des Bildspeichers 50 stehen mit einer Korrelationsvorrichtung 52 in Wirkverbindung. Diese Korrelationsvorrichtung 52 erhält daher an seinen als A und B bezeichneten Eingängen einerseits das aktuelle Bild und andererseits das zuletzt gewonnene Bild der Kameras 20. Die Korrelationsvorrichtung 52 berechnet hieraus das folgende Integral:

$$\iint dx\,dy\, A^{*}(x,y)\,B(x+\Delta x, y+\Delta y)$$

Dieses Integral liefert ein Maximum bei jener Verschiebung Δx, Δy, bei der die bestmögliche Übereinstimmung zwischen dem aktuellen Bild und dem gespeicherten Bild der Kameras 20 erzielt wird. Dabei spielt die Änderung Δy in Laufrichtung 8 keine Rolle, wichtig ist lediglich die Änderung Δx quer zur Laufrichtung 8. Die Änderung Δx wird dann durch die verstrichene Zeit geteilt, so dass man auf diese Weise die Geschwindigkeit der Warenbahn 2 quer zur Laufrichtung 8 erhält. Dieser Wert wird an einem Ausgang 53 als Geschwindigkeitssignal 54 ausgegeben.

Das Hilfssignal 35, das gespeicherte Lagesignal 42 und das Geschwindigkeitssignal 54 werden anschließend einem Integrator 60 zugeführt. Dieser Integrator 60 ist derart aufgebaut, dass er bei positivem Hilfssignal 35 an seinem Ausgang 61 das gespeicherte Lagesignal 42 abgibt, welches dem Lagesignal 35 entspricht. Bei negativem Hilfssignal 35 beginnt die Integration des Integrators 60 zu laufen, wobei die zeitliche Integration über das Geschwindigkeitssignal 54 berechnet wird. Die Integration erfolgt dabei nach folgender Formel:

$$s + \int_0^t dt\, v(t)$$

Dabei ist v das Geschwindigkeitssignal 54 und s das gespeicherte Lagesignal 42. Auf diese Weise wird erreicht, dass der Integrator 60 bei negativem Hilfssignal 35 das Geschwindigkeitssignal 54 aufsummiert, so dass ein Ausgangssignal 7 am Ausgang 61 auch bei nicht erfolgter Erfassung der Markierung 13 der Bewegung der Warenbahn 2 quer zur Laufrichtung 8 folgt. Das Ausgangssignal 7 entspricht dabei unmittelbar nach Erscheinen des negativen Hilfssignals 35 noch dem letzten Lagesignal 33. Durch die wesentlich ungenauere Erfassung der Bahnlage mittels der Korrelationsvorrichtung 52 ist jedoch das Geschwindigkeitssignal 54 wesentlich weniger genau als das Lagesignal 33. Daher vergrößert sich im Integrator 60 mit zunehmender Zeit ein Fehler, was in der Regel aber toleriert werden kann. Sobald die Markierung 13 wieder erfasst wird, gibt der Integrator 60 wieder das gespeicherte Lagesignal 42 an seinem Ausgang 61 als Ausgangssignal 7 ab. Damit bleibt der beschriebene Fehler des Integrators 60 in all jenen Fällen klein, in denen die Unterbrechungen 14 der Markierung 13 hinreichend kurz sind.

Das Ausgangssignal 7 der Rechenschaltung 6 steht mit der Bahnlaufregelvorrichtung 3 über einen Bahnlaufregler 70 in Wirkverbindung. Dieser Bahnlaufregler 70 hat vorzugsweise ein PID-Verhalten und steuert mit seinem Ausgang 71 nicht dargestellte Stellmotoren der Bahnlaufregelvorrichtung 3 an. Diese Stellmotoren bewirken eine Verschwenkung von Walzen 72, durch die auf die Warenbahn 2 eine Kraft quer zur Laufrichtung 8 ausgeübt wird, um eine im Bahnlaufregler 70 festgestellte Regelabweichung auszugleichen. Dabei ist es wichtig, dass während des Betriebs des Bahnlaufreglers 70 das Ausgangssignal 7 der Rechenschaltung 6 eine dauernde Abhängigkeit von der Lage der Warenbahn 2 quer zur Laufrichtung 8 aufweist. Anderenfalls bestünde die Gefahr, dass die Integralkomponente des PID-Regelverhaltens des Bahnlaufreglers 70 zu beliebig großen Werten anwächst und die Bahnlaufregelung ausfällt.

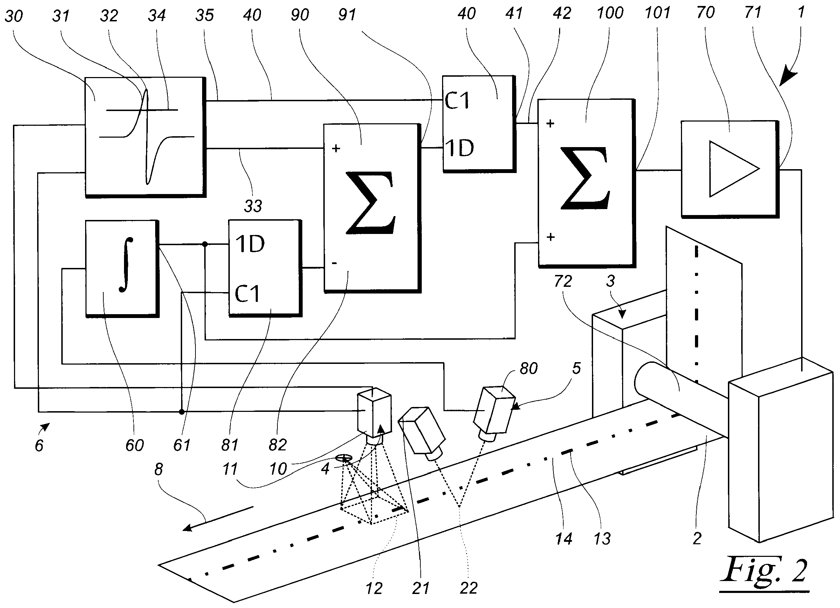

Die Figur 2 zeigt eine alternative Ausführungsform der Vorrichtung gemäß Figur 1, wobei gleiche Bezugszeichen gleiche Teile benennen. Im Folgenden wird lediglich auf die Unterschiede zur Ausführungsform gemäß Figur 1 eingegangen.

Bei dieser Ausführungsform ist der zweite Sensor 5 nicht von einer Kameraanordnung, sondern von einem Doppler-Sensor 80 gebildet. Hierzu wird die Warenbahn 2 mit der Lichtquelle 21 in Form eines Lasers beleuchtet und Frequenzunterschiede zweidimensional vom Doppler-Sensor 80 erfasst. Aus diesen Frequenzunterschieden kann die jeweilige Geschwindigkeitskomponente der Warenbahn 2 unmittelbar berechnet werden. Dieses Geschwindigkeitssignal wird unmittelbar dem Integrator 60 zugeführt, so dass dieser aus dem Geschwindigkeitssignal ein Lagesignal kontinuierlich berechnet.

Alternativ kann der zweite Sensor 5 auch von einer selbstmodulierenden Laserdiode gebildet sein. Diese erzeugt einen Laserstrahl, der vorzugsweise senkrecht auf die Warenbahn 2 gerichtet ist, so dass von der Warenbahn 2 reflektiertes Licht wieder in die selbstmodulierende Laserdiode eingekoppelt wird. Auf diese Weise manipuliert das von der Warenbahn 2 reflektierte Licht die Lichterzeugung in der Laserdiode, wodurch deren Leistung moduliert wird. Diese Leistungsmodulation ist dabei von der Geschwindigkeit der Warenbahn 2 abhängig und kann als direktes Maß für die Warenbahngeschwindigkeit genutzt werden. Auf diese Weise ergibt sich eine besonders kostengünstige Realisierung für den zweiten Sensor 5.

Es versteht sich, dass bei einer praktischen Anwendung dieser Schaltung der Integrator 60 eine Reset-Automatik aufweisen wird, die diesen vor einem Überlauf schützt. Diese kann beispielsweise derart aufgebaut sein, dass bei Überschreiten einer oberen Schwelle bzw. Unterschreiten einer unteren Schwelle der Integrator 60 auf den Wert Null gesetzt wird. Parallel dazu muss diese Reset-Automatik aber dafür sorgen, dass die im Folgenden beschriebenen Speichervorrichtungen 40, 81 ebenfalls entsprechend korrigiert werden, damit der Integrator-Reset keinerlei Auswirkungen auf das Ergebnis der Rechenschaltung 6 hat.

Der Ausgang 61 des Integrators 60 ist mit einem Dateneingang einer Speichervorrichtung 81 verbunden. Diese Speichervorrichtung 81 speichert den vom Integrator 60 ermittelten Lagewert zum Zeitpunkt der Markierungserfassung.

Dieser Zeitpunkt liegt vor jenem Zeitpunkt, an dem die Bildverarbeitungsvorrichtung 30 die Position der Markierung 13 ermitteln konnte. Dabei ist zu berücksichtigen, dass die von der Bildverarbeitungsvorrichtung 30 durchzuführenden Rechnungen zum Teil sehr aufwendig sein können und folglich erhebliche Zeit in Anspruch nehmen können.

Das Lagesignal 33 der Bildverarbeitungsvorrichtung 30 wird nicht invertierend einem Summierer 90 zugeführt. Dagegen wird der in der Speichervorrichtung 81 gespeicherte Integrationswert, welcher zum Zeitpunkt der Markierungserfassung abgespeichert wurde, dem Summierer 90 invertierend zugeführt, so dass der Summierer 90 die Differenz beider Werte berechnet. An einem Ausgang 91 des Summierers 90 steht damit ein Wert an, der dem von der Bildverarbeitungsvorrichtung 30 ermittelten Lagesignal 33 abzüglich des bis zur Markierungserfassung aufgelaufenen Integrationswerts entspricht.

Der Ausgang 91 des Summierers 90 steht mit der Speichervorrichtung 40 in Wirkverbindung, welche den genannten Wert am Ausgang 91 des Summierers 90 zum Zeitpunkt des Abschlusses der Berechnungen in der Bildverarbeitungsvorrichtung 30 speichert. Am Ausgang 41 der Speichervorrichtung 40 steht demnach das gespeicherte Lagesignal 42 an, welches einem weiteren Summierer 100 nicht invertierend zugeführt wird. Dem Summierer 100 wird außerdem das Ausgangssignal des Integrators 60 nicht invertierend zugeführt, so dass der Summierer 100 an seinem Ausgang 101 die Summe aus dem gespeicherten Lagesignal 42 und dem zeitlich aktuellen Wert des Integrators 60 erzeugt. Da in der Speichervorrichtung 40 das Lagesignal 33 abzüglich des Integrationswertes zum Zeitpunkt der Markierungserfassung gespeichert ist, berechnet somit der Summierer 100 das Lagesignal 33 zuzüglich dem Integral des Geschwindigkeitssignals seit der Erfassung der Markierung 13.

Durch diese etwas komplexe Maßnahme wird erreicht, dass zwar am Ausgang 101 des Summierers 100 ein dem Lagesignal 33 entsprechendes Signal anliegt, das Ausgangssignal des Summierers 100 liefert jedoch nicht den berechneten Wert des Lagesignals 33, sondern einen rückgerechneten Wert des Lagesignals 33 zum Zeitpunkt der Erfassung der Markierung 13. Die von der Bildverarbeitungsvorrichtung 30 hervorgerufene Latenzzeit aufgrund der langwierigen Berechnungen wird auf diese Weise kompensiert. Das Signal am Ausgang 101 des Summierers 100 folgt quasi unmittelbar und nahezu ohne spürbare Zeitverzögerung der Lageänderung der Markierung 13. Hierdurch kann der Bahnlaufregler 70 mit wesentlich höheren Verstärkungsfaktoren für den Proportional-Integral- und Differential-Anteil arbeiten, wodurch die Bahnlaufregelung erheblich schneller wird als bei der üblichen Einbeziehung der Latenzzeit, ohne ungedämpfte Schwingungen zu verursachen.

Die dargestellten und beschriebenen Ausführungsbeispiele sind lediglich bevorzugte Ausführungsformen des Erfindungsgegenstandes. Die Erfindung und ihr Schutzbereich sind jedoch nicht auf diese Ausführungsform beschränkt. Es ist insbesondere auch daran gedacht, die verschiedenen Aspekte und Merkmale der einzelnen Ausführungsformen zu mischen. So kann beispielsweise die Latenzzeitkompensation der Rechenschaltung gemäß Figur 2 auch bei den Sensoren gemäß Figur 1 und umgekehrt genutzt werden.

## Bezugszeichenliste

| | | | | |
|---|---|---|---|---|
| 1 | Vorrichtung | 52 | Korrelationsvorrichtung |
| 2 | Warenbahn | | |
| 3 | Bahnlaufregelvorrichtung | 53 | Ausgang |
| 4 | erster Sensor | 54 | Geschwindigkeitssignal |
| 5 | zweiter Sensor | 60 | Integrator |
| 6 | Rechenschaltung | 61 | Ausgang |
| 7 | Ausgangssignal | 70 | Bahnlaufregler |
| 8 | Laufrichtung | 71 | Ausgang |
| 9 | Bedruckung | 72 | Walze |
| 10 | Kamera | 80 | Doppler-Sensor |
| 11 | Lichtquelle | 81 | Speichervorrichtung |
| 12 | Erfassungsbereich | 82 | Ausgang |
| 13 | Markierung | 90 | Summierer |
| 14 | Unterbrechung | 91 | Ausgang |
| 20 | Kamera | 100 | Summierer |
| 21 | Lichtquelle | 101 | Ausgang |
| 22 | Erfassungsbereich | | |
| 30 | Bildverarbeitungsvorrichtung | | |
| 31 | Peak | | |
| 32 | Lage | | |
| 33 | Lagesignal | | |

(fortgesetzt)

| | |
|---|---|
| 34 | Mindestamplitude |
| 35 | Hilfssignal |
| 40 | Speichervorrichtung |
| 41 | Ausgang |
| 42 | Gespeichertes Lagesignal |
| 50 | Bildspeicher |
| 51 | Ausgang |

**Patentansprüche**

1. Verfahren zur Lageerfassung einer in einer Laufrichtung (8) laufenden Warenbahn (2), auf der mindestens eine Markierung (13) vorgesehen ist, deren Lage als Kriterium zur Lageerfassung dient, und die von mindestens einem ersten Sensor (4) erfasst wird, der mindestens ein von der mindestens einen Markierung (13) abhängiges Messsignal erzeugt und daraus mindestens ein zur Lage der mindestens einen Markierung (13) proportionales Lagesignal (33) abgibt, wobei die Warenbahn (2) von mindestens einem zweiten Sensor (5) erfasst wird, **dadurch gekennzeichnet, dass** der mindestens eine zweite Sensor mindestens eine Geschwindigkeitskomponente der Warenbahn (2) quer zur Laufrichtung (8) erfasst und mindestens ein hierzu proportionales Geschwindigkeitssignal (54) abgibt, wobei aus dem mindestens einen Lagesignal (33) und dem mindestens einen Geschwindigkeitssignal (54) mindestens ein Ausgangssignal (7) berechnet wird, welches auch bei zeitlich begrenztem Ausfall des mindestens einen Lagesignals (33) lageproportionale Werte repräsentiert.

2. Verfahren nach Anspruch 1, **dadurch gekennzeichnet, dass** der mindestens eine zweite Sensor (5) zusätzlich mindestens eine weitere Geschwindigkeitskomponente der Warenbahn (2) in Laufrichtung (8) erfasst.

3. Verfahren nach Anspruch 1 oder 2, **dadurch gekennzeichnet, dass** das mindestens eine Geschwindigkeitssignal (54) aus einer zeitlichen Verschiebung von Bildern der Warenbahn (2) durch zweidimensionale Ortsfilterung, durch Anwendung des Doppler-Effekts und/oder mittels mindestens einer selbstmodulierenden Laserdiode erzeugt wird.

4. Verfahren nach Anspruch 3, **dadurch gekennzeichnet, dass** die zeitliche Verschiebung durch eine Korrelationsanalyse der Bilder der Warenbahn (2) berechnet wird.

5. Verfahren nach mindestens einem der Ansprüche 1 bis 4, **dadurch gekennzeichnet, dass** der mindestens eine erste Sensor (4) mindestens ein Hilfssignal (35) abgibt, welches die Qualität der Erfassung der mindestens einen Markierung (13) anzeigt.

6. Verfahren nach mindestens einem der Ansprüche 1 bis 5, **dadurch gekennzeichnet, dass** das mindestens eine Lagesignal (33) gespeichert wird und mindestens ein gespeichertes Lagesignal (42) unverändert bleibt, so lange kein zuverlässiger Messwert durch den mindestens einen ersten Sensor (4) erfasst wird, das mindestens eine gespeicherte Lagesignal (42) aber bei korrekter Erfassung der mindestens einen Markierung (13) dem Lagesignal (33) oder dem Lagesignal (33) zuzüglich einem Integral des mindestens einen Geschwindigkeitssignals (54) folgt.

7. Verfahren nach Anspruch 6, **dadurch gekennzeichnet, dass** das gespeicherte Lagesignal (33) als Anfangswert einer Integration des mindestens einen Geschwindigkeitssignals (54) verwendet wird.

8. Verfahren nach mindestens einem der Ansprüche 1 bis 7, **dadurch gekennzeichnet, dass** die Warenbahn (2) in ihrem Verlauf quer zur Laufrichtung (8) geregelt wird, wobei das mindestens eine Ausgangssignal (7) als Ist-Wert verwendet wird.

9. Vorrichtung zur Lageerfassung einer in einer Laufrichtung (8) laufenden Warenbahn, auf der mindestens eine Markierung (13) vorgesehen ist, deren Lage als Kriterium zur Lageerfassung dient, und die von mindestens einem ersten Sensor (4) erfasst ist, der mindestens ein von der mindestens einen Markierung (13) abhängiges Messsignal erzeugt und daraus mindestens ein zur Lage der mindestens einen Markierung (13) proportionales Lagesignal (33) wobei die Warenbahn (2) von mindestens einem zweiten Sensor (5) erfasst ist, **dadurch gekennzeichnet, dass** der mindestens eine zweite Sensor mindestens eine Geschwindigkeitskomponente der Warenbahn (2) quer zur Laufrichtung (8) erfasst und mindestens ein hierzu proportionales Geschwindigkeitssignal (54) abgibt, wobei der mindestens eine erste Sensor (4) und der mindestens eine zweite Sensor (5) mit mindestens einer Rechenschaltung (6) in Wirkverbindung stehen, welche aus dem mindestens einen Lagesignal (33) und dem mindestens einen Geschwindigkeitssignal (54) mindestens ein Ausgangssignal (7) berechnet, welches auch bei Ausfall des Lagesignals (33) lageproportionale Werte repräsentiert.

10. Vorrichtung nach Anspruch 9, **dadurch gekennzeichnet, dass** der mindestens eine zweite Sensor (5) mindestens eine weitere Geschwindigkeitskomponente der Warenbahn (2) in Laufrichtung (8) erfasst.

11. Vorrichtung nach Anspruch 9 oder 10, **dadurch gekennzeichnet, dass** mindestens einer der Sensoren (4, 5) mindestens eine Kamera (10), Laser, Doppler-Sensor (80) und/oder selbstmodulierende Laserdiode aufweist.

12. Vorrichtung nach mindestens einem der Ansprüche 9 bis 11, **dadurch gekennzeichnet, dass** die mindestens eine Rechenschaltung (6) mindestens einen Integrator (60) aufweist, der mit dem mindestens einen Lagesignal (33) als Ausgangswert das zeitliche Integral des mindestens einen Geschwindigkeitssignals (54) berechnet.

13. Vorrichtung nach Anspruch 12, **dadurch gekennzeichnet, dass** die mindestens eine Rechenschaltung (6) mindestens einen Steuereingang aufweist, der bei vorhandenem Lagesignal (33) dieses statt dem integrierten Signal ausgibt.

14. Vorrichtung nach mindestens einem der Ansprüche 9 bis 13, **dadurch gekennzeichnet, dass** die Vorrichtung (1) mit mindestens einem Bahnlaufregler (70) in Wirkverbindung steht.

**Claims**

1. Method for position detection of a material web (2) moving in a movement direction (8), on which at least one marking (13) is provided, of which the position is used as a criterion for the position detection and which is detected by at least one first sensor (4) that produces at least one measurement signal dependent on the at least one marking (13) and emits therefrom at least one position signal (33) proportional to the position of the at least one marking (13), wherein the material web (2) is detected by at least one second sensor (5), **characterized in that** the at least one second sensor detects at least one velocity component of the material web (2) transversely to the movement direction (8) and emits at least one velocity signal (54) proportional thereto, at least one output signal (7), which represents position-proportional values even in the event of time-limited failure of the at least one position signal (33), being calculated from the at least one position signal (33) and the at least one velocity signal (54).

2. Method according to Claim 1, **characterized in that** the at least one second sensor (5) additionally detects at least one further velocity component of the material web (2) in the movement direction (8).

3. Method according to Claim 1 or 2, **characterized in that** the at least one velocity signal (54) is produced from a displacement as a function of time of images of the material web (2) by two-dimensional spatial filtering, by using the Doppler effect and/or by means of at least one self-modulating laser diode.

4. Method according to Claim 3, **characterized in that** the displacement as a function of time is calculated by a correlation analysis of the images of the material web (2).

5. Method according to at least one of Claims 1 to 4, **characterized in that** the at least one first sensor (4) emits at least one auxiliary signal (35) which indicates the quality of the detection of the at least one marking (13).

6. Method according to at least one of Claims 1 to 5, **characterized in that** the at least one position signal (33) is stored, and at least one stored position signal (42) remains unchanged so long as a reliable measurement value is not detected by the at least one first sensor (4), but the at least one stored position signal (42) follows the position signal (33) or the position signal (33) plus an integral of the at least one velocity signal (54) in the event of correct detection of the at least one marking (13).

7. Method according to Claim 6, **characterized in that** the stored position signal (33) is used as initial value of an integration of the at least one velocity signal (54).

8. Method according to at least one of Claims 1 to 7, **characterized in that** the material web (2) is regulated in its profile transversely to the movement direction (8), the at least one output signal (7) being used as an actual value.

9. Device for position detection of a material web moving in a movement direction (8), on which at least one marking (13) is provided, of which the position is used as a criterion for the position detection and which is detected by at least one first sensor (4) that produces at least one measurement signal dependent on the at least one marking (13) and emits therefrom at least one position signal (33) proportional to the position of the at least one marking (13), wherein the material web (2) is detected by at least one second sensor (5), **characterized in that** the at least one second sensor detects at least one velocity component of the material web (2) transversely to the movement direction (8) and emits at least one velocity signal (54) proportional thereto, the at least one first sensor (4) and the at least one second sensor (5) being actively connected to at least one calculation circuit (6) which calculates at least one output signal (7), which represents position-proportional values even in the event of failure of the position signal (33), from the at least one position signal (33) and the at least one velocity signal (54).

10. Device according to Claim 9, **characterized in that** the at least one second sensor (5) detects at least one further velocity component of the material web (2) in the movement direction (8).

11. Device according to Claim 9 or 10, **characterized in that** at least one of the sensors (4, 5) has at least one camera (10), laser, Doppler sensor (80) and/or self-modulating laser diode.

12. Device according to at least one of Claims 9 to 11, **characterized in that** the at least one calculation circuit (6) has at least one integrator (60), which calculates the integral with respect to time of the at least one velocity signal (54) with the at least one position signal (33) as initial value.

13. Device according to Claim 12, **characterized in that** the at least one calculation circuit (6) has at least one control input which, when there is a position signal (33), emits the latter instead of the integrated signal.

14. Device according to at least one of Claims 9 to 13, **characterized in that** the device (1) is actively connected to at least one web movement regulator (70) .

**Revendications**

1. Procédé de détection de position d'une bande de matière (2) qui défile dans une direction de défilement (8), sur laquelle se trouve au moins un marquage (13) dont la position sert de critère pour la détection de position et qui est détecté par au moins un premier capteur (4), lequel génère au moins un signal de mesure dépendant de l'au moins un marquage (13) et délivre à partir de celui-ci au moins un signal de position (33) proportionnel à la position de l'au moins un marquage (13), la bande de matière (2) étant détectée par au moins un deuxième capteur (5), **caractérisé en ce que**
l'au moins un deuxième capteur détecte au moins une composante de vitesse de la bande de matière (2) transversalement à la direction de défilement (8) et délivre au moins un signal de vitesse (54) proportionnel à celle-ci, au moins un signal de sortie (7) étant calculé à partir de l'au moins un signal de position (33) et de l'au moins un signal de vitesse (54), lequel représente des valeurs proportionnelles à la position même en cas de défaillance limitée dans le temps de l'au moins un signal de position (33).

2. Procédé selon la revendication 1, **caractérisé en ce que** l'au moins un deuxième capteur (5) détecte en plus au moins une composante de vitesse supplémentaire de la bande de matière (2) dans la direction du défilement (8).

3. Procédé selon la revendication 1 ou 2, **caractérisé en ce que** l'au moins un signal de vitesse (54) est généré à partir d'un décalage dans le temps des images de la bande de matière (2) par filtrage local bidimensionnel, par utilisation de l'effet Doppler et/ou au moyen d'au moins une diode laser à auto-modulation.

4. Procédé selon la revendication 3, **caractérisé en ce que** le décalage dans le temps est calculé par une analyse de corrélation des images de la bande de matière (2).

5. Procédé selon au moins l'une des revendications 1 à 4, **caractérisé en ce que** l'au moins un premier capteur (4) délivre au moins un signal auxiliaire (35) qui indique la qualité de la détection de l'au moins un marquage (13).

**6.** Procédé selon au moins l'une des revendications 1 à 5, **caractérisé en ce que** l'au moins un signal de position (33) est mémorisé et au moins un signal de position mémorisé (42) reste inchangé tant qu'aucune valeur mesurée fiable n'est détectée par l'au moins un premier capteur (4), l'au moins un signal de position mémorisé (42), dans le cas d'une détection correcte de l'au moins un marquage (13), suit cependant le signal de position (33) ou le signal de position (33) plus une intégrale de l'au moins un signal de vitesse (54).

**7.** Procédé selon la revendication 6, **caractérisé en ce que** le signal de position (33) mémorisé est utilisé comme valeur initiale d'une intégration de l'au moins un signal de vitesse (54).

**8.** Procédé selon au moins l'une des revendications 1 à 7, **caractérisé en ce que** le tracé de la bande de matière (2) est régulé transversalement à la direction du défilement (8), l'au moins un signal de sortie (7) étant utilisé comme valeur réelle.

**9.** Dispositif de détection de position d'une bande de matière qui défile dans une direction de défilement (8), sur laquelle se trouve au moins un marquage (13) dont la position sert de critère pour la détection de position et qui est détecté par au moins un premier capteur (4), lequel génère au moins un signal de mesure dépendant de l'au moins un marquage (13) et délivre à partir de celui-ci au moins un signal de position (33) proportionnel à la position de l'au moins un marquage (13), la bande de matière (2) étant détectée par au moins un deuxième capteur (5), **caractérisé en ce que** l'au moins un deuxième capteur détecte au moins une composante de vitesse de la bande de matière (2) transversalement à la direction de défilement (8) et délivre au moins un signal de vitesse (54) proportionnel à celle-ci, l'au moins un premier capteur (4) et l'au moins un deuxième capteur (5) étant en liaison fonctionnelle avec au moins un circuit de calcul (6) qui calcule au moins un signal de sortie (7) à partir de l'au moins un signal de position (33) et de l'au moins un signal de vitesse (54), lequel représente des valeurs proportionnelles à la position même en cas de défaillance du signal de position (33).

**10.** Dispositif selon la revendication 9, **caractérisé en ce que** l'au moins un deuxième capteur (5) détecte au moins une composante de vitesse supplémentaire de la bande de matière (2) dans la direction du défilement (8).

**11.** Dispositif selon la revendication 9 ou 10, **caractérisé en ce qu'**au moins l'un des capteurs (4, 5) possède au moins une caméra (10), un laser, un capteur à effet Doppler (80) et/ou une diode laser à auto-modulation.

**12.** Dispositif selon au moins l'une des revendications 9 à 11, **caractérisé en ce que** l'au moins un circuit de calcul (6) possède au moins un intégrateur (60) qui calcule l'intégrale dans le temps de l'au moins un signal de vitesse (54) en prenant comme valeur initiale l'au moins un signal de position (33) .

**13.** Dispositif selon la revendication 12, **caractérisé en ce que** l'au moins un circuit de calcul (6) possède au moins une entrée de commande qui, lorsque le signal de position (33) est présent, utilise celui-ci au lieu du signal intégré.

**14.** Dispositif selon au moins l'une des revendications 9 à 13, **caractérisé en ce que** le dispositif (1) se trouve en liaison fonctionnelle avec au moins un régulateur de défilement de bande (70).

Fig. 1

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2703772 B1

- US 4694181 A